# EUROPEAN PATENT APPLICATION

(11) **EP 4 832 654 A1**
(43) Date of publication of application: **28.10.2026**
(21) Application number: 26173123.6
(22) Date of filing: 17.04.2026
(51) Int. Cl.: H04W 84/12, H04W 36/08, H04W 36/00

(54) **ELECTRONIC DEVICE, CONTROL METHOD, COMPUTER PROGRAM, AND COMPUTER READABLE MEDIUM**

(30) Priority: 21.04.2025 JP 2025069737
(71) Applicant: Canon Kabushiki Kaisha, Tokyo 146-8501 (JP)
(72) Inventor: SUNAMI, Ryosuke, Tokyo, 146-8501 (JP)
(74) Representative: Canon Europe Limited

(57) **Abstract**

An electronic device according to the present disclosure includes a transmission unit configured to transmit frequency information through first communication, an activation unit configured to activate an access point function on a basis of the frequency information, and an establishment unit configured to establish a connection for performing second communication in response to a request from an external device.

## Description

### TECHNICAL FIELD

The present disclosure relates to an electronic device, and particularly relates to a technique for searching for an access point.

### BACKGROUND

Processing called handover for switching communication from first communication to second communication is known. In handover, a processing time for switching communication from the first communication to the second communication occurs.

### SUMMARY

Usually, in a case where the communication device is executing handover when a user of the communication device capable of executing handover operates the communication device, the user needs to wait for the handover to be completed and operate the communication device. That is, the handover processing time is the user's waiting time. When the handover processing time increases, the waiting time of the user increases. Therefore, the handover processing time is preferably short. Japanese Patent Publication No. 2019-134254 and Japanese Patent Publication No. 2007-306510 disclose techniques for shortening handover processing time. However, in the techniques disclosed in Japanese Patent Publication No. 2019-134254 and Japanese Patent Publication No. 2007-306510, it may take time to search for an access point in handover. If it takes time to search for an access point in handover, it takes time to perform handover.

The present disclosure provides a technique for enabling an access point to be found in a short time.

The present disclosure in its first aspect provides an electronic device as specified in claims 1 to 9. The present disclosure in its second aspect provides a control method as specified in claims 10 and 11. The present disclosure in its third aspect provides a computer program as specified in claim 12. The present disclosure in its fourth aspect provides a computer readable medium as specified in claim 13.

According to the present disclosure, an access point can be found in a short time.

Features of the present disclosure will become apparent from the following description of embodiments with reference to the attached drawings. The following description of embodiments is described by way of example.

### BRIEF DESCRIPTION OF THE DRAWINGS

FIG. 1A is a block diagram illustrating a configuration of a digital camera.
FIG. 1B is a front view illustrating a configuration of the digital camera.
FIG. 1C is a rear view illustrating a configuration of the digital camera.
FIG. 2 is a block diagram illustrating a configuration of a smart device.
FIG. 3 is a system configuration diagram illustrating a configuration of a system.
FIG. 4 is a screen diagram showing a display screen of the digital camera.
FIG. 5 is a screen diagram illustrating a display screen of the smart device.
FIG. 6 is a sequence diagram illustrating processing of the system according to a first embodiment.
FIG. 7 is a flowchart illustrating processing of the digital camera according to the first embodiment.
FIG. 8 is a flowchart illustrating processing of the smart device according to the first embodiment.
FIG. 9 is a sequence diagram illustrating processing of the system according to a second embodiment.
FIG. 10 is a flowchart illustrating processing of the digital camera according to the second embodiment.
FIG. 11 is a flowchart illustrating processing of the smart device according to the second embodiment.

### DESCRIPTION OF THE EMBODIMENTS

The embodiments of the present disclosure will be described below with reference to the drawings. It should be noted that the following embodiments do not limit the scope of the present disclosure, and not all combinations of features described in these embodiments are necessarily essential to the solutions of the present disclosure. In addition, identical components are denoted by the same reference numerals. Each of the embodiments of the present invention described below can be implemented solely or as a combination of a plurality of the embodiments or features thereof where necessary or where the combination of elements or features from individual embodiments in a single embodiment is beneficial.

### First Embodiment

Hereinafter, a first embodiment of the present disclosure will be described.

### Configuration of Digital Camera

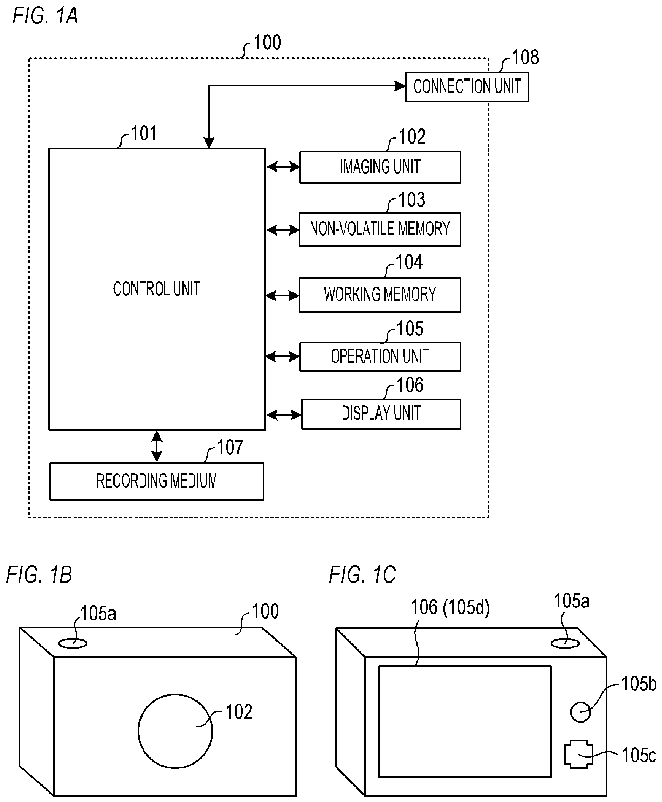

A configuration and a function of a digital camera 100 according to the first embodiment will be described with reference to FIGS. 1A to 1C. FIGS. 1A to 1C are diagrams illustrating a configuration of the digital camera 100. Specifically, FIG. 1A is a block diagram illustrating a hardware configuration of the digital camera 100. FIG. 1B is a front view of the digital camera 100. FIG. 1C is a rear view of the digital camera 100.

In the first embodiment, the communication device that is an electronic device is a digital camera capable of capturing an image such as a still image or a moving image, but the communication device is not limited to the digital camera. For example, the communication device may be a surveillance camera, a medical camera, or the like. The communication device may be an information processing device such as a tablet device or a personal computer.

The digital camera 100 includes a control unit 101, an imaging unit 102, a non-volatile memory 103, a working memory 104, an operation unit 105, a display unit 106, a recording medium 107, and a connection unit 108.

The control unit 101 is an arithmetic processing unit that integrally controls the entire digital camera 100. The control unit 101 executes a program stored in the non-volatile memory 103 to be described later, thereby implementing various types of processing such as communication processing and control processing. The control unit 101 includes, for example, a central processing unit (CPU). The control unit 101 may include another processor such as a micro processing unit (MPU), a graphics processing unit (GPU), or a quantum processing unit (QPU) instead of or in addition to the CPU. Note that, instead of the control unit 101 controlling the entire device, one or a plurality of pieces of hardware such as an application specific integrated circuit (ASIC) or a field programmable gate array (FPGA) may share processing to control a part or the entire device.

For example, the control unit 101 transmits the frequency information through the first communication. The frequency information is transmitted to the outside via the connection unit 108. The control unit 101 activates an access point function (a function of operating the digital camera 100 as an access point) on the basis of the frequency information. The control unit 101 establishes a connection for performing the second communication in response to a request from the external device. Note that details of the processing by the control unit 101 will be described later.

The imaging unit 102 includes a lens group including a zoom lens, a focus lens, and the like, a shutter having an aperture function, and the like. Furthermore, the imaging unit 102 includes an imaging element including a charge coupled device (CCD), a complementary metal-oxide-semiconductor (CMOS) element, or the like that converts an object image into an electric signal, and an A/D converter that converts an analog image signal output from the imaging element into a digital signal. The imaging unit 102 is controlled by the control unit 101, converts object image light formed by a lens included in the imaging unit 102 into an electric signal by an imaging element, performs noise reduction processing and the like, and outputs image data composed of digital signals. The image data output from the imaging unit 102 is recorded in the recording medium 107, for example.

The non-volatile memory 103 is an electrically erasable and recordable memory, and is, for example, an electrically erasable programmable read-only memory (EEPROM). In the non-volatile memory 103, constants, programs, and the like for operation of the control unit 101 are recorded. The program referred to herein is a program for executing processing described later in the first embodiment.

The working memory 104 temporarily stores programs and data. The working memory 104 is, for example, a random access memory (RAM). The working memory 104 is used as a work area in which constants and variables for operation of the control unit 101, a program read from the non-volatile memory 103, and the like are expanded. In addition, the working memory 104 is used as a buffer memory that temporarily holds image data captured by the imaging unit 102 and an image display memory of the display unit 106.

The operation unit 105 includes operation members such as various switches, various buttons, and various touch panels that receive various operations from the user. For example, as illustrated in FIGS. 1B and 1C, the operation unit 105 includes a shutter button 105a, a reproduction button 105b, a four-way key 105c, a touch panel 105d, and the like. The shutter button 105a receives an operation related to photographing of an object (also referred to as image capture). The reproduction button 105b receives an operation related to reproduction of the captured image. The four-way key 105c has up, down, left, and right buttons, and receives an operation related to various settings of the digital camera 100. The touch panel 105d is formed integrally with the display unit 106 and receives various operations.

The shutter button 105a is turned on in the middle of the operation, by so-called half-pressing (photographing/image capture preparation instruction), and outputs a first shutter switch signal. When receiving the first shutter switch signal, the control unit 101 controls the imaging unit 102 to start photographing preparation processing including autofocus (AF) processing, automatic exposure (AE) processing, automatic white balance (AWB) processing, flash preliminary light emission (EF) processing, and the like. The shutter button 105a is turned on when the operation is completed, that is, when the shutter button is fully pressed (photographing/image capture instruction), and outputs a second shutter switch signal. When receiving the second shutter switch signal, the control unit 101 starts a series of photographing (image capturing) processing from reading of the signal from the imaging unit 102 to writing of the image data in the recording medium 107.

The display unit 106 performs display of a viewfinder image at the time of photographing, display of a photographed (recorded) image, display of characters for interactive operation, and the like. The display unit 106 is, for example, a display device such as a liquid crystal display or an organic EL display. The display unit 106 may be integrated with the digital camera 100 or may be an external device connected to the digital camera 100. The digital camera 100 can be connected to the display unit 106 and may have a function of controlling display on the display unit 106.

The recording medium 107 records the image data output from the imaging unit 102 as an image file. The control unit 101 reads the image file recorded in the recording medium 107. The recording medium 107 may be a memory card or a hard disk drive attached to the digital camera 100, or may be a flash memory or a hard disk drive built in the digital camera 100. The digital camera 100 may have at least a function of accessing the recording medium 107.

The connection unit 108 is an interface for communicably connecting to an external device. The digital camera 100 can transmit and receive data to and from an external device via the connection unit 108. For example, the digital camera 100 transmits the image data output from the imaging unit 102 to an external device via the connection unit 108. The digital camera 100 can also receive a control instruction output from an external device via the connection unit 108. In the first embodiment, the connection unit 108 includes an interface for communicating with an external device via a wireless LAN conforming to the IEEE802.11 standard. The control unit 101 realizes wireless communication with an external device by controlling the connection unit 108. As a protocol for communicating data, for example, picture transfer protocol over Internet protocol (PTP/IP) can be used. Note that communication with an external device is not limited to communication via a wireless LAN. For example, the connection unit 108 may include an interface for short-range wireless communication such as an infrared communication interface, Bluetooth (registered trademark), or near field communication (NFC). The connection unit 108 may include an interface for wired communication such as USB, HDMI (registered trademark), and IEEE1394.

### Configuration of Smart Device

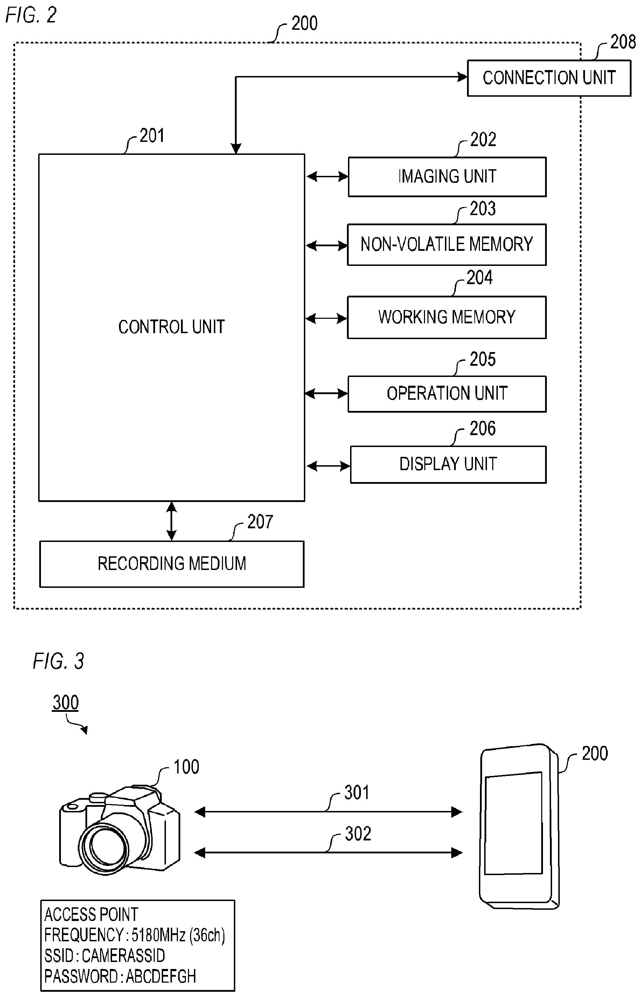

A configuration and a function of a smart device 200 according to the first embodiment will be described with reference to FIG. 2. FIG. 2 is a block diagram illustrating a hardware configuration of the smart device 200.

In the first embodiment, the external device that is an electronic device is a smart device such as a smartphone, a tablet device, or a wearable computer, but the external device is not limited to the smart device. For example, the external device may be a digital camera, a mobile phone, a personal computer, or the like. The smartphone may be interpreted as a type of mobile phone.

The smart device 200 includes a control unit 201, an imaging unit 202, a non-volatile memory 203, a working memory 204, an operation unit 205, a display unit 206, a recording medium 207, and a connection unit 208. Basic functions of these elements are similar to those of the digital camera 100, and detailed description thereof will be omitted.

For example, the control unit 201 receives the frequency information transmitted from the digital camera 100 through a first communication. The frequency information is received via the connection unit 208. The frequency information transmitted from the digital camera 100 is received through the first communication. The control unit 201 searches for an access point on the basis of the received frequency information. The control unit 201 establishes a connection for performing a second communication with the access point found in the search. Note that details of the processing by the control unit 201 will be described later.

The non-volatile memory 203 stores an operating system (OS) that is basic software executed by the control unit 201 and an application that implements an application function in cooperation with the OS. In addition, the non-volatile memory 203 stores an application (software) for performing communication with the digital camera 100, control of the digital camera 100, and the like. This application uses the basic functions of the OS installed in the smart device 200. Note that the OS of the smart device 200 may have a function of realizing the processing in the first embodiment.

### Configuration of System

The configuration of a system 300 according to the first embodiment will be described with reference to FIG. 3. FIG. 3 is a system configuration diagram illustrating the configuration of the system 300. The system 300 includes a digital camera 100 and a smart device 200. A first communication 301 is communication performed between the connection unit 108 of the digital camera 100 and the connection unit 208 of the smart device 200, and is short-range wireless communication such as Bluetooth communication (including Bluetooth Low Energy communication). A second communication 302 is also communication performed between the connection unit 108 of the digital camera 100 and the connection unit 208 of the smart device 200, and is, for example, wireless LAN communication conforming to the IEEE802.11 standard. The second communication 302 is assumed to be Wi-Fi communication in which the digital camera 100 operates as an access point (AP) and the smart device 200 operates as a station (STA). For the second communication 302, it is assumed that the frequency of the access point is 5180 MHz (36ch), the SSID is CAMERASSID, and the password is ABCDEFGH.

Note that the first communication 301 and the second communication 302 are not limited to the examples set out above (Bluetooth communication and wireless LAN), and for example, any suitable communication methods can be used as the first communication 301 and second communication 302 so as to satisfy the condition that the maximum distance in which the first communication 301 can be performed is shorter than the maximum distance in which the second communication 302 can be performed.

### Display Screen of Digital Camera

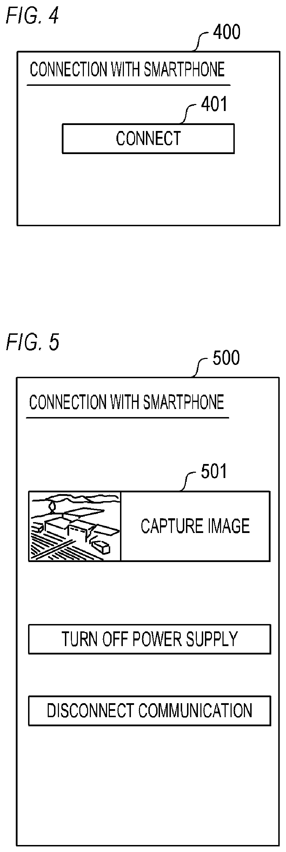

A display screen of the digital camera 100 will be described with reference to FIG. 4. FIG. 4 is a screen diagram showing a display screen of the digital camera 100. A display screen 400 is displayed on the display unit 106 of the digital camera 100. The display screen 400 includes a button 401 for the user to instruct the control unit 101 to perform the first communication 301 with the external device.

### Display Screen of Smart Device

A display screen of the smart device 200 will be described with reference to FIG. 5. FIG. 5 is a screen diagram illustrating a display screen of the smart device 200. A display screen 500 is displayed on the display unit 206 of the smart device 200. The display screen 500 includes a button 501 for the user to instruct the control unit 201 to perform the second communication 302 with the communication device.

### Processing Sequence of System

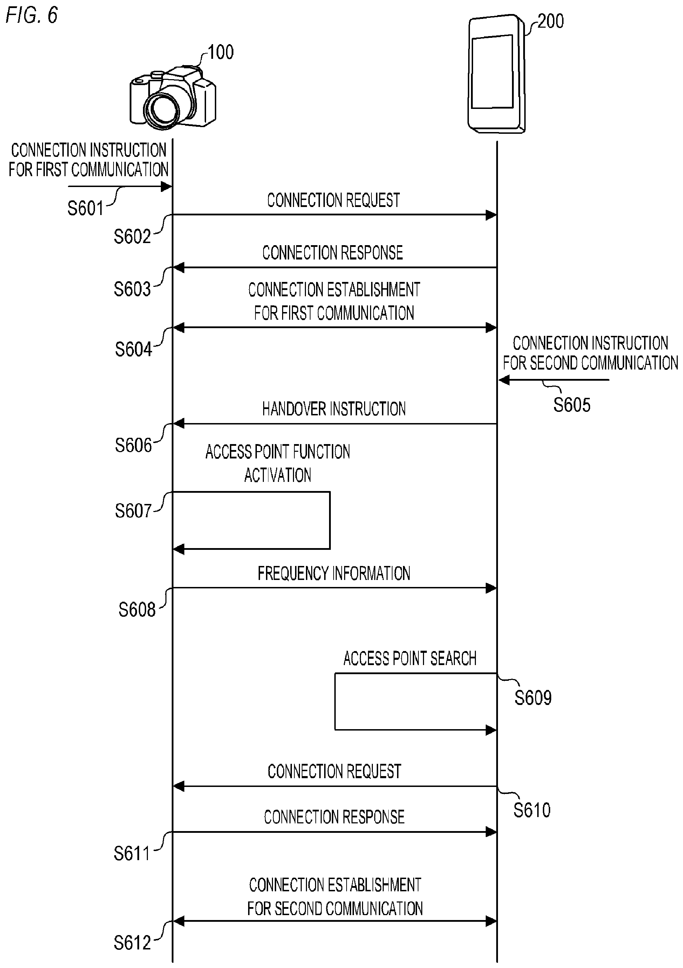

A processing sequence of the system 300 will be described with reference to FIG. 6. FIG. 6 is a sequence diagram illustrating a processing sequence of the system 300. In FIG. 6, the processing performed by the control unit 101 of the digital camera 100 is realized by the control unit 101 developing a program recorded in the non-volatile memory 103 in the working memory 104 and executing the program. The processing performed by the control unit 201 of the smart device 200 is realized by the control unit 201 developing a program recorded in the non-volatile memory 203 in the working memory 204 and executing the program. For example, when the digital camera 100 and the smart device 200 are activated, the processing sequence of FIG. 6 starts.

In S601, the control unit 101 of the digital camera 100 receives a connection instruction for the first communication 301 from the user via the operation unit 105. For example, when the button 401 is pressed (selected) by the user while the display screen 400 in FIG. 4 is displayed on the display unit 106, the control unit 101 determines that the connection of the first communication 301 is instructed by the user.

In S602, the control unit 101 of the digital camera 100 transmits a connection request to the smart device 200 via the connection unit 108. The control unit 201 of the smart device 200 receives the connection request from the digital camera 100 via the connection unit 208.

In S603, the control unit 201 of the smart device 200 transmits a connection response to the digital camera 100 via the connection unit 208. The control unit 101 of the digital camera 100 receives the connection response from the smart device 200 via the connection unit 108.

In S604, the control unit 101 of the digital camera 100 establishes a connection for performing the first communication 301 with the smart device 200. The control unit 201 of the smart device 200 establishes a connection for performing the first communication 301 with the digital camera 100.

In S605, the control unit 201 of the smart device 200 receives a connection instruction for the second communication 302 from the user via the operation unit 205. For example, when the button 501 is pressed (selected) by the user while the display screen 500 in FIG. 5 is displayed on the display unit 206, the control unit 201 determines that the connection of the second communication 302 is instructed by the user.

In S606, the control unit 201 of the smart device 200 transmits a handover instruction to the digital camera 100 via the connection unit 208 through the first communication 301. The control unit 101 of the digital camera 100 receives the handover instruction from the smart device 200 via the connection unit 108 through the first communication 301.

In S607, the control unit 101 of the digital camera 100 activates the access point function. For example, the control unit 101 activates the access point function such that the digital camera 100 operates as an access point whose SSID is CAMERASSID, whose password is ABCDEFGH, and whose frequency is 5180 MHz (36ch). Note that the SSID, the password, and the frequency are not limited to those described above. For example, the frequency may be 2412 MHz (1ch) or the like. The frequency information may be stored in advance in the non-volatile memory 103, and a frequency corresponding to the frequency information may be used as the frequency of the access point.

In S608, the control unit 101 of the digital camera 100 transmits the frequency information of the access point function activated by the control unit 101 in S607 to the smart device 200 via the connection unit 108 through the first communication 301. The control unit 201 of the smart device 200 receives the frequency information of the access point function activated by the control unit 101 in S607 from the digital camera 100 via the connection unit 108 through the first communication 301. The frequency information may or may not be information indicating the frequency itself (for example, 5180 MHz). For example, the frequency information may be information indicating a channel corresponding to a frequency (for example, 36 ch corresponding to 5180 MHz), and the control unit 201 of the smart device 200 may determine the frequency from the channel.

Note that the timing at which the control unit 101 of the digital camera 100 transmits the frequency information through the first communication 301 is not limited to the timing of S608. For example, the control unit 101 may transmit the frequency information through the first communication 301 immediately after the control unit 101 establishes the connection for the first communication 301 in S604.

In S609, the control unit 201 of the smart device 200 determines the frequency of the digital camera 100, which is an access point, from the frequency information received by the control unit 201 through the first communication 301 in S608, and searches for an access point on the basis of the determined frequency. Since the control unit 201 searches for an access point on the basis of the received frequency information instead of the full-band scan in which the smart device 200 searches for all the corresponding frequencies, it is possible to shorten the search time of the access point as compared with the full-band scan.

In S610, the control unit 201 of the smart device 200 transmits a connection request to the digital camera 100 via the connection unit 208. The control unit 101 of the digital camera 100 receives the connection request from the smart device 200 via the connection unit 108. Note that CAMERASSID as the SSID and ABCDEFGH as the password are stored in advance in the non-volatile memory 203, and the control unit 201 includes these pieces of information in the connection request and transmits the connection request to the digital camera 100.

In S611, the control unit 101 of the digital camera 100 transmits a connection response to the smart device 200 via the connection unit 108. The control unit 201 of the smart device 200 receives the connection response from the digital camera 100 via the connection unit 208.

In S612, the control unit 101 of the digital camera 100 establishes a connection for performing the second communication 302 with the smart device 200. The control unit 201 of the smart device 200 establishes a connection for performing the second communication 302 with the digital camera 100.

### Processing Flow of Digital Camera

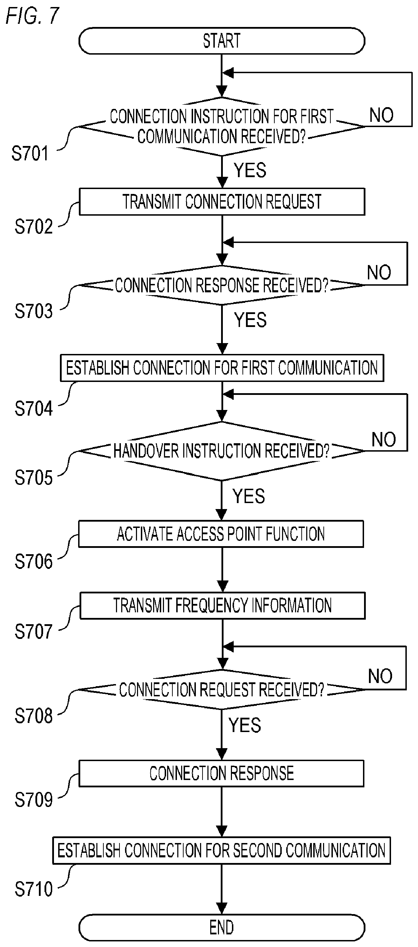

A processing flow of the digital camera 100 will be described with reference to FIG. 7. FIG. 7 is a flowchart illustrating a processing flow of the digital camera 100. The processing flow of FIG. 7 is realized by the control unit 101 of the digital camera 100 developing a program recorded in the non-volatile memory 103 in the working memory 104 and executing the program. For example, when the digital camera 100 is activated, the processing flow of FIG. 7 starts.

In S701, the control unit 101 of the digital camera 100 determines whether or not a connection instruction for the first communication 301 has been received from the user. The control unit 101 repeats the processing of S701 until it is determined that the connection instruction for the first communication 301 has been received from the user, and advances the processing to S702 when it is determined that the connection instruction for the first communication 301 has been received from the user. S701 corresponds to S601 in FIG. 6.

In S702, the control unit 101 of the digital camera 100 transmits a connection request to the smart device 200 via the connection unit 108. S702 corresponds to S602 in FIG. 6.

In S703, the control unit 101 of the digital camera 100 determines whether or not a connection response has been received from the smart device 200. The control unit 101 repeats the processing of S703 until it is determined that a connection response has been received from the smart device 200, and advances the processing to S704 when it is determined that the connection response has been received from the smart device 200. S703 corresponds to S603 in FIG. 6.

In S704, the control unit 101 of the digital camera 100 establishes a connection for performing the first communication 301 with the smart device 200. S704 corresponds to S604 in FIG. 6.

In S705, the control unit 101 of the digital camera 100 determines whether or not a handover instruction has been received from the smart device 200. The control unit 101 repeats the processing of S705 until it is determined that a handover instruction has been received from the smart device 200, and advances the processing to S706 when it is determined that the handover instruction has been received from the smart device 200. S705 corresponds to S606 in FIG. 6.

In S706, the control unit 101 of the digital camera 100 activates the access point function. S706 corresponds to S607 in FIG. 6.

In S707, the control unit 101 of the digital camera 100 transmits the frequency information to the smart device 200 via the connection unit 108 through the first communication 301. S707 corresponds to S608 in FIG. 6.

In S708, the control unit 101 of the digital camera 100 determines whether a connection request has been received from the smart device 200. The control unit 101 repeats the processing of S708 until it is determined that the connection request has been received from the smart device 200, and advances the processing to S709 when it is determined that the connection request has been received from the smart device 200. S708 corresponds to S610 in FIG. 6.

In S709, the control unit 101 of the digital camera 100 transmits a connection response to the smart device 200 via the connection unit 108. S709 corresponds to S611 in FIG. 6.

In S710, the control unit 101 of the digital camera 100 establishes a connection for performing the second communication 302 with the smart device 200. S710 corresponds to S612 in FIG. 6.

### Processing Flow of Smart Device

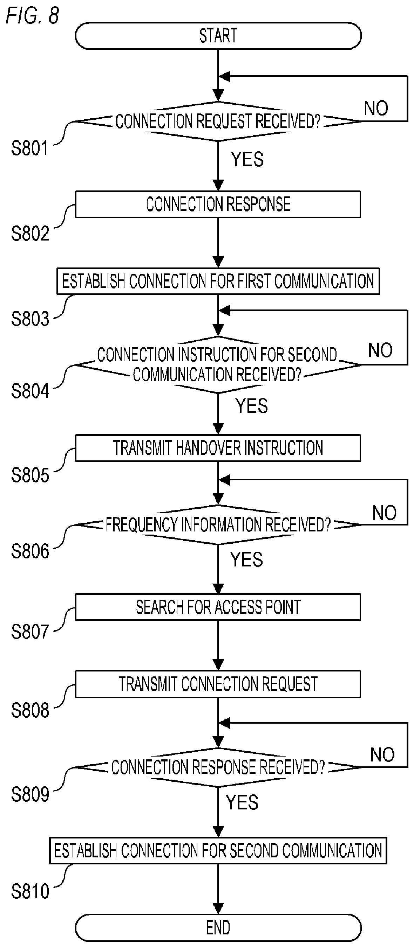

A processing flow of the smart device 200 will be described with reference to FIG. 8. FIG. 8 is a flowchart illustrating a processing flow of the smart device 200. The processing flow of FIG. 8 is realized by the control unit 201 of the smart device 200 loading a program recorded in the non-volatile memory 203 in the working memory 204 and executing the program. For example, when the smart device 200 is activated, the processing flow of FIG. 8 starts.

In S801, the control unit 201 of the smart device 200 determines whether or not a connection request has been received from the digital camera 100. The control unit 201 repeats the processing of S801 until it is determined that the connection request has been received from the digital camera 100, and advances the processing to S802 when it is determined that the connection request has been received from the digital camera 100. S801 corresponds to S602 in FIG. 6.

In S802, the control unit 201 of the smart device 200 transmits a connection response to the digital camera 100 via the connection unit 208. S802 corresponds to S603 in FIG. 6.

In S803, the control unit 201 of the smart device 200 establishes a connection for performing the first communication 301 with the digital camera 100. S803 corresponds to S604 in FIG. 6.

In S804, the control unit 201 of the smart device 200 determines whether or not a connection instruction for the second communication 302 has been received from the user. The control unit 201 repeats S804 until it is determined that the connection instruction for the second communication 302 has been received from the user, and advances the processing to S805 when it is determined that the connection instruction for the second communication 302 has been received from the user. S804 corresponds to S605 in FIG. 6.

In S805, the control unit 201 of the smart device 200 transmits a handover instruction to the digital camera 100 via the connection unit 208 through the first communication 301. S805 corresponds to S606 in FIG. 6.

In S806, the control unit 201 of the smart device 200 determines whether or not frequency information has been received from the digital camera 100. The control unit 201 repeats the processing of S806 until it is determined that the frequency information has been received from the digital camera 100, and advances the processing to S807 when it is determined that the frequency information has been received from the digital camera 100. S806 corresponds to S608 in FIG. 6.

In S807, the control unit 201 of the smart device 200 searches for an access point. S807 corresponds to S609 in FIG. 6.

In S808, the control unit 201 of the smart device 200 transmits a connection request to the digital camera 100 via the connection unit 208. S808 corresponds to S610 in FIG. 6.

In S809, the control unit 201 of the smart device 200 determines whether or not a connection response has been received from the digital camera 100. The control unit 201 repeats the processing of S809 until it is determined that a connection response has been received from the digital camera 100, and advances the processing to S810 when it is determined that the connection response has been received from the digital camera 100. S809 corresponds to S611 in FIG. 6.

In S810, the control unit 201 of the smart device 200 establishes a connection for performing communication of the second communication 302 with the digital camera 100. S810 corresponds to S612 in FIG. 6.

According to the first embodiment, the digital camera 100 transmits the frequency information to the smart device 200 through the first communication. Then, the smart device 200 receives the frequency information from the digital camera 100 through the first communication, and searches for an access point on the basis of the received frequency information. Then, the digital camera 100 and the smart device 200 establish the second communication. The smart device 200 searches for an access point on the basis of the received frequency information instead of the full-band scan in which all frequencies corresponding to the smart device 200 are searched. In this way, the search time of the access point (in handover) can be shortened as compared with the full-band scan.

### Second Embodiment

Hereinafter, a second embodiment of the present disclosure will be described. Hereinafter, description of the same points (configuration, processing, and the like) as in the first embodiment will be appropriately omitted.

In the first embodiment, the frequency information is transmitted from the digital camera 100 to the smart device 200 through the first communication. In the second embodiment, identification information (for example, SSID) and a password of the digital camera 100 are further transmitted from the digital camera 100 to the smart device 200 through the first communication. Note that transmission of one of the identification information and the password may be omitted.

### Processing Sequence of System

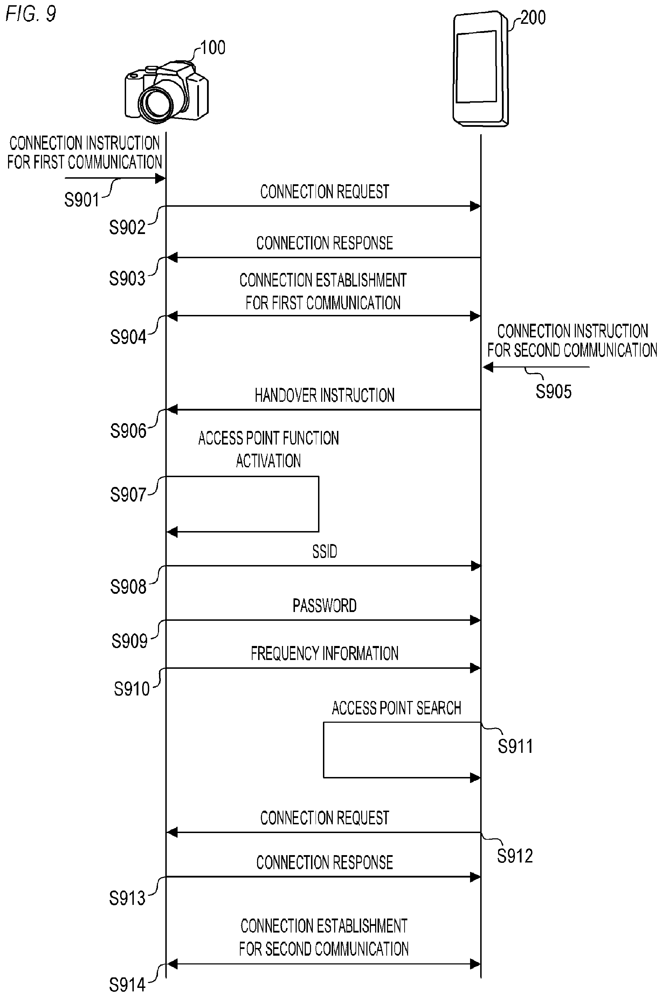

A processing sequence of the system 300 according to the second embodiment will be described with reference to FIG. 9. FIG. 9 is a sequence diagram illustrating a processing sequence of the system 300. In FIG. 9, the processing performed by the control unit 101 of the digital camera 100 is realized by the control unit 101 developing a program recorded in the non-volatile memory 103 in the working memory 104 and executing the program. The processing performed by the control unit 201 of the smart device 200 is realized by the control unit 201 developing a program recorded in the non-volatile memory 203 in the working memory 204 and executing the program. For example, when the digital camera 100 and the smart device 200 are activated, the processing sequence of FIG. 9 starts.

In S901, the control unit 101 of the digital camera 100 receives a connection instruction for the first communication 301 from the user via the operation unit 105. For example, when the button 401 is pressed (selected) by the user while the display screen 400 in FIG. 4 is displayed on the display unit 106, the control unit 101 determines that the connection of the first communication 301 is instructed by the user.

In S902, the control unit 101 of the digital camera 100 transmits a connection request to the smart device 200 via the connection unit 108. The control unit 201 of the smart device 200 receives the connection request from the digital camera 100 via the connection unit 208.

In S903, the control unit 201 of the smart device 200 transmits a connection response to the digital camera 100 via the connection unit 208. The control unit 101 of the digital camera 100 receives the connection response from the smart device 200 via the connection unit 108.

In S904, the control unit 101 of the digital camera 100 establishes a connection for performing the first communication 301 with the smart device 200. The control unit 201 of the smart device 200 establishes a connection for performing the first communication 301 with the digital camera 100.

In S905, the control unit 201 of the smart device 200 receives a connection instruction for the second communication 302 from the user via the operation unit 205. For example, when the button 501 is pressed (selected) by the user while the display screen 500 in FIG. 5 is displayed on the display unit 206, the control unit 201 determines that the connection of the second communication 302 is instructed by the user.

In S906, the control unit 201 of the smart device 200 transmits a handover instruction to the digital camera 100 via the connection unit 208 through the first communication 301. The control unit 101 of the digital camera 100 receives the handover instruction from the smart device 200 via the connection unit 108 through the first communication 301.

In S907, the control unit 101 of the digital camera 100 activates the access point function. For example, the control unit 101 activates the access point function such that the digital camera 100 operates as an access point whose SSID is CAMERASSID, whose password is ABCDEFGH, and whose frequency is 5180 MHz (36ch). Note that the SSID, the password, and the frequency are not limited to those described above. For example, the frequency may be 2412 MHz (1ch) or the like. The frequency information may be stored in advance in the non-volatile memory 103, and a frequency corresponding to the frequency information may be used as the frequency of the access point.

In S908, the control unit 101 of the digital camera 100 transmits the SSID of the access point function activated by the control unit 101 in S907 to the smart device 200 via the connection unit 108 through the first communication 301. The control unit 201 of the smart device 200 receives the SSID of the access point function activated by the control unit 101 in S907 from the digital camera 100 via the connection unit 108 through the first communication 301.

In S909, the control unit 101 of the digital camera 100 transmits the password of the access point function activated by the control unit 101 in S907 to the smart device 200 via the connection unit 108 through the first communication 301. The control unit 201 of the smart device 200 receives the password of the access point function activated by the control unit 101 in S907 from the digital camera 100 via the connection unit 108 through the first communication 301.

In S910, the control unit 101 of the digital camera 100 transmits the frequency information of the access point function activated by the control unit 101 in S907 to the smart device 200 via the connection unit 108 through the first communication 301. The control unit 201 of the smart device 200 receives the frequency information of the access point function activated by the control unit 101 in S907 from the digital camera 100 via the connection unit 108 through the first communication 301. The frequency information may or may not be information indicating the frequency itself (for example, 5180 MHz). For example, the frequency information may be information indicating a channel corresponding to a frequency (for example, 36 ch corresponding to 5180 MHz), and the control unit 201 of the smart device 200 may determine the frequency from the channel.

Note that the timing at which the control unit 101 of the digital camera 100 transmits the SSID, the password, and the frequency information through the first communication 301 is not limited to the timing of S908 to S910. For example, the control unit 101 may transmit the SSID, the password, and the frequency information through the first communication 301 immediately after the control unit 101 establishes the connection for the first communication 301 in S904.

In S911, the control unit 201 of the smart device 200 determines the frequency of the digital camera 100, which is an access point, from the frequency information received by the control unit 201 through the first communication 301 in S910, and searches for an access point on the basis of the determined frequency. Since the control unit 201 searches for an access point on the basis of the received frequency information instead of the full-band scan in which the smart device 200 searches for all the corresponding frequencies, it is possible to shorten the search time of the access point as compared with the full-band scan.

In S911, the control unit 201 of the smart device 200 may search for the access point on the basis of the SSID received by the control unit 201 through the first communication 301 in S908. The control unit 201 can shorten the search time of the access point as compared with the full-band scan also by searching for the access point on the basis of the received SSID instead of the full-band scan in which the smart device 200 searches for all the corresponding frequencies. The control unit 201 may search for an access point on the basis of both the received frequency information and the received SSID. As a result, the search time of the access point can be expected to be further shortened.

In S912, the control unit 201 of the smart device 200 transmits a connection request to the digital camera 100 via the connection unit 208. The control unit 101 of the digital camera 100 receives the connection request from the smart device 200 via the connection unit 108. The control unit 201 includes CAMERASSID, which is the SSID received from the digital camera 100 in S908, and ABCDEFGH, which is the password received from the digital camera 100 in S909, in the connection request, and transmits the connection request to the digital camera 100. Failure of connection for the second communication 302 can be suppressed by using the SSID and the password received from the digital camera 100.

In S913, the control unit 101 of the digital camera 100 transmits a connection response to the smart device 200 via the connection unit 108. The control unit 201 of the smart device 200 receives the connection response from the digital camera 100 via the connection unit 208.

In S914, the control unit 101 of the digital camera 100 establishes a connection for performing the second communication 302 with the smart device 200. The control unit 201 of the smart device 200 establishes a connection for performing the second communication 302 with the digital camera 100.

### Processing Flow of Digital Camera

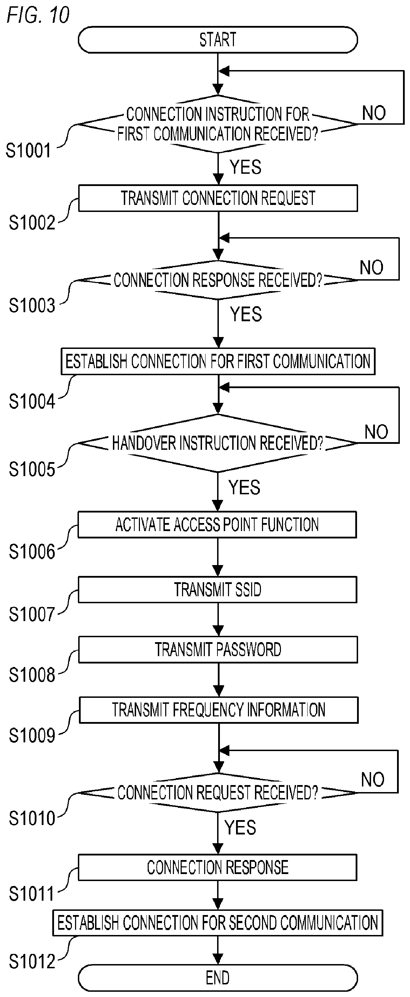

A processing flow of the digital camera 100 according to the second embodiment will be described with reference to FIG. 10. FIG. 10 is a flowchart illustrating a processing flow of the digital camera 100. The processing flow of FIG. 10 is realized by the control unit 101 of the digital camera 100 developing a program recorded in the non-volatile memory 103 in the working memory 104 and executing the program. For example, when the digital camera 100 is activated, the processing flow of FIG. 10 starts.

In S1001, the control unit 101 of the digital camera 100 determines whether or not a connection instruction for the first communication 301 has been received from the user. The control unit 101 repeats the processing of S1001 until it is determined that the connection instruction for the first communication 301 has been received from the user, and advances the processing to S1002 when it is determined that the connection instruction for the first communication 301 has been received from the user. S1001 corresponds to S901 in FIG. 9.

In S1002, the control unit 101 of the digital camera 100 transmits a connection request to the smart device 200 via the connection unit 108. S1002 corresponds to S902 in FIG. 9.

In S1003, the control unit 101 of the digital camera 100 determines whether or not a connection response has been received from the smart device 200. The control unit 101 repeats the processing of S1003 until it is determined that the connection response has been received from the smart device 200, and advances the processing to S1004 when it is determined that the connection response has been received from the smart device 200. S1003 corresponds to S903 in FIG. 9.

In S1004, the control unit 101 of the digital camera 100 establishes a connection for performing the first communication 301 with the smart device 200. S1004 corresponds to S904 in FIG. 9.

In S1005, the control unit 101 of the digital camera 100 determines whether or not a handover instruction has been received from the smart device 200. The control unit 101 repeats the processing of S1005 until it is determined that the handover instruction has been received from the smart device 200, and advances the processing to S1006 when it is determined that the handover instruction has been received from the smart device 200. S1005 corresponds to S906 in FIG. 9.

In S1006, the control unit 101 of the digital camera 100 activates the access point function. S1006 corresponds to S907 in FIG. 9.

In S1007, the control unit 101 of the digital camera 100 transmits the SSID to the smart device 200 via the connection unit 108 through the first communication 301. S1007 corresponds to S908 in FIG. 9.

In S1008, the control unit 101 of the digital camera 100 transmits the password to the smart device 200 via the connection unit 108 through the first communication 301. S1008 corresponds to S909 in FIG. 9.

In S1009, the control unit 101 of the digital camera 100 transmits the frequency information to the smart device 200 via the connection unit 108 through the first communication 301. S1009 corresponds to S910 in FIG. 9.

In S1010, the control unit 101 of the digital camera 100 determines whether a connection request has been received from the smart device 200. The control unit 101 repeats the processing of S1010 until it is determined that the connection request has been received from the smart device 200, and advances the processing to S1011 when it is determined that the connection request has been received from the smart device 200. S1010 corresponds to S912 in FIG. 9.

In S1011, the control unit 101 of the digital camera 100 transmits a connection response to the smart device 200 via the connection unit 108. S1011 corresponds to S913 in FIG. 9.

In S1012, the control unit 101 of the digital camera 100 establishes a connection for performing the second communication 302 with the smart device 200. S1012 corresponds to S914 in FIG. 9.

### Processing Flow of Smart Device

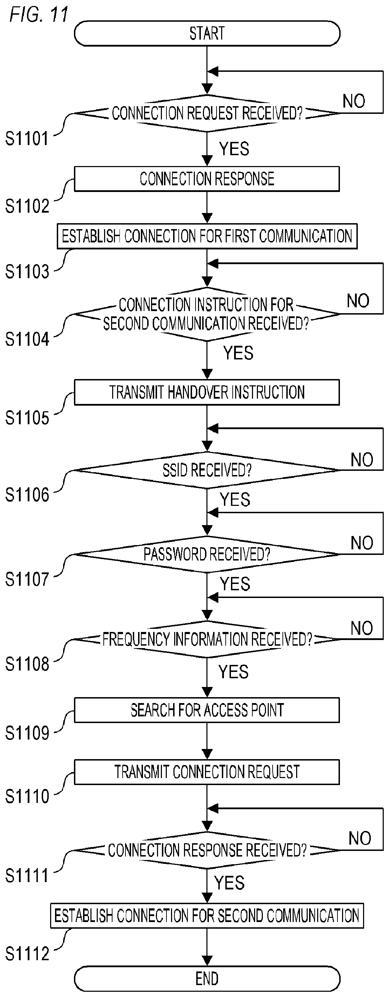

A processing flow of the smart device 200 according to the second embodiment will be described with reference to FIG. 11. FIG. 11 is a flowchart illustrating a processing flow of the smart device 200. The processing flow of FIG. 11 is realized by the control unit 201 of the smart device 200 developing a program recorded in the non-volatile memory 203 in the working memory 204 and executing the program. For example, when the smart device 200 is activated, the processing flow of FIG. 11 starts.

In S1101, the control unit 201 of the smart device 200 determines whether or not a connection request has been received from the digital camera 100. The control unit 201 repeats the processing of S1101 until it is determined that the connection request has been received from the digital camera 100, and advances the processing to S1102 when it is determined that the connection request has been received from the digital camera 100. S1101 corresponds to S902 in FIG. 9.

In S1102, the control unit 201 of the smart device 200 transmits a connection response to the digital camera 100 via the connection unit 208. S1102 corresponds to S903 in FIG. 9.

In S1103, the control unit 201 of the smart device 200 establishes a connection for performing the first communication 301 with the digital camera 100. S1103 corresponds to S904 in FIG. 9.

In S1104, the control unit 201 of the smart device 200 determines whether or not a connection instruction for the second communication 302 has been received from the user. The control unit 201 repeats S1104 until it is determined that the connection instruction for the second communication 302 has been received from the user, and advances the processing to S1105 when it is determined that the connection instruction for the second communication 302 has been received from the user. S1104 corresponds to S905 in FIG. 9.

In S1105, the control unit 201 of the smart device 200 transmits a handover instruction to the digital camera 100 via the connection unit 208 through the first communication 301. S1105 corresponds to S906 in FIG. 9.

In S1106, the control unit 201 of the smart device 200 determines whether or not the SSID has been received from the digital camera 100. The control unit 201 repeats the processing of S1106 until it is determined that the SSID has been received from the digital camera 100, and advances the processing to S1107 when it is determined that the SSID has been received from the digital camera 100. S1106 corresponds to S908 in FIG. 9.

In S1107, the control unit 201 of the smart device 200 determines whether or not the password has been received from the digital camera 100. The control unit 201 repeats the processing of S1107 until it is determined that the password has been received from the digital camera 100, and advances the processing to S1108 when it is determined that the password has been received from the digital camera 100. S1107 corresponds to S909 in FIG. 9.

In S1108, the control unit 201 of the smart device 200 determines whether or not the frequency information has been received from the digital camera 100. The control unit 201 repeats the processing of S1108 until it is determined that the frequency information has been received from the digital camera 100, and advances the processing to S1109 when it is determined that the frequency information has been received from the digital camera 100. S1108 corresponds to S910 in FIG. 9.

In S1109, the control unit 201 of the smart device 200 searches for an access point. S1109 corresponds to S911 in FIG. 9.

In S1110, the control unit 201 of the smart device 200 transmits a connection request to the digital camera 100 via the connection unit 208. S1110 corresponds to S912 in FIG. 9.

In S1111, the control unit 201 of the smart device 200 determines whether or not a connection response has been received from the digital camera 100. The control unit 201 repeats the processing of S1111 until it is determined that the connection response has been received from the digital camera 100, and advances the processing to S1112 when it is determined that the connection response has been received from the digital camera 100. S1111 corresponds to S913 in FIG. 9.

In S1112, the control unit 201 of the smart device 200 establishes a connection for performing communication of the second communication 302 with the digital camera 100. S1112 corresponds to S914 in FIG. 9.

According to the second embodiment, the digital camera 100 transmits the SSID, the password, and the frequency information to the smart device 200 through the first communication. Then, the smart device 200 receives the SSID, the password, and the frequency information from the digital camera 100 through the first communication, and the smart device 200 searches for an access point on the basis of at least one of the received SSID and frequency information. The smart device 200 searches for an access point on the basis of at least one of the received SSID and frequency information instead of the full-band scan in which all the frequencies corresponding to the smart device 200 are searched. In this way, the search time of the access point (in handover) can be shortened as compared with the full-band scan.

In addition, the smart device 200 transmits a connection request to the digital camera 100 on the basis of the received SSID and password, and the digital camera 100 and the smart device 200 establish the second communication. In this way, it is possible to suppress failure of connection for the second communication.

Note that the above-described various types of control may or may not be performed by one piece of hardware (for example, a processor or a circuit). A plurality of pieces of hardware (for example, a plurality of processors, a plurality of circuits, or a combination of one or more processors and one or more circuits) may share processing to control the entire device.

The processor is a processor in a broad sense, and includes a general-purpose processor and a dedicated processor. The general-purpose processor is, for example, a central processing unit (CPU), a micro processing unit (MPU), or a digital signal processor (DSP). The dedicated processor is, for example, a graphics processing unit (GPU), an application specific integrated circuit (ASIC), or a programmable logic device (PLD). The programmable logic device is, for example, a field programmable gate array (FPGA) or a complex programmable logic device (CPLD).

Although the embodiments of the present disclosure have been described in detail, the present disclosure is not limited to these specific embodiments, and various forms without departing from the gist of the present disclosure are also included in the present disclosure. Furthermore, each of the above-described embodiments merely illustrates an embodiment of the present disclosure, and each embodiment can be appropriately combined.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An electronic device (100) comprising:
transmission means (108) configured to transmit frequency information through first communication;
activation means (101) configured to activate an access point function on a basis of the frequency information; and
establishment means configured to establish a connection for performing second communication in response to a request from an external device.

2. The electronic device (100) according to claim 1, wherein a maximum distance capable of performing the first communication is shorter than a maximum distance capable of performing the second communication.

3. The electronic device (100) according to claim 1 or 2, wherein the first communication is short-range wireless communication, and the second communication is Wi-Fi communication.

4. The electronic device (100) according to any one of claims 1 to 3, wherein
the transmission means (108) transmits the frequency information and identification information of the electronic device (100), and
the activation means (101) activates an access point function on a basis of the frequency information and the identification information.

5. The electronic device (100) according to claim 4, wherein the identification information is an SSID.

6. The electronic device (100) according to any one of claims 1 to 5, wherein
the transmission means (108) transmits the frequency information and a password, and
the activation means (101) activates an access point function on a basis of the frequency information and the password.

7. A second electronic device (200) used together with a first electronic device (100) that is the electronic device according to any one of claims 1 to 6, the second electronic device (200) comprising:
reception means (208) configured to receive the frequency information transmitted from the first electronic device through first communication;
search means (201) configured to search for an access point on a basis of the frequency information; and
second establishment means configured to establish a connection for performing second communication with the access point found by the search means.

8. The second electronic device (200) according to claim 7, wherein
the first electronic device (100) transmits the frequency information and identification information of the first electronic device (100),
the reception means (208) receives the frequency information and the identification information, and
the search means (201) searches for an access point on a basis of the frequency information and the identification information.

9. The second electronic device (200) according to claim 7 or 8, wherein
the first electronic device (100) transmits the frequency information and a password,
the reception means (208) receives the frequency information and the password, and
the second establishment means uses the password to establish a connection for performing the second communication with the access point found by the search means (201).

10. A control method of an electronic device, comprising:
a transmission step (S707) of transmitting frequency information through first communication;
an activation step (S706) of activating an access point function on a basis of the frequency information; and
an establishment step (S710) of establishing a connection for performing second communication in response to a request from an external device.

11. A control method of a second electronic device used together with a first electronic device that is the electronic device according to any one of claims 1 to 6, the control method comprising:
a reception step (S806) of receiving the frequency information transmitted from the first electronic device through first communication;
a search step (S807) of searching for an access point on a basis of the frequency information; and
an establishment step (S810) of establishing a connection for performing second communication with the access point found in the search step.

12. A computer program comprising instructions which, when the program is executed by one or more processors of an electronic device, cause the electronic device to perform the method of claim 10 or claim 11.

13. A computer readable medium having stored thereon the computer program of claim 12.
